# EUROPEAN PATENT SPECIFICATION

(11) **EP 2 478 998 B1**
(45) Date of publication and mention of the grant of the patent: **10.01.2018**
(21) Application number: 12164398.5
(22) Date of filing: 20.03.2008
(51) Int. Cl.: B24B 23/02, B24B 23/04, H02P 6/00

(54) **Control method for an electric sanding machine**
Regelverfahren für eine elektrische Schleifmaschine
Methode de contrôle pour une machine à poncer électrique

(30) Priority: 21.03.2007 FI 20075183; 22.08.2007 FI 20075582
(43) Date of publication of application: 25.07.2012
(62) Divisional of application: 08736779.3
(73) Proprietor: Mirka Oy, 66850 Jeppo (FI)
(72) Inventor: Nordström, Caj, 66850 Jeppo (FI)
(74) Representative: Hoffmann Eitle

(56) References cited:
- EP-A- 0 982 845
- EP-A2- 0 805 548
- WO-A1-03/041242
- DE-A1- 10 318 636
- GB-A- 2 281 665
- US-A- 5 907 209
- US-A1- 2006 132 081
- US-A1- 2007 262 672
- US-A1- 2008 048 516
- "Power factor corrector, Application manual", POWER FACTOR CORRECTOR, XX, XX, vol. first ed, 1 October 1995 (1995-10-01) , pages 7-19, XP007906468,
- KIT SUM K: "IMPROVED VALLEY-FILL PASSIVE POWER FACTOR CORRECTION CURRENT SHAPER APPROACHES IEC SPECIFICATION LIMITS", MANUSCRIPT SWISSBALL EXERCISES, XX, XX, vol. 24, no. 2, 1 February 1998 (1998-02-01), pages 42,44,47-51, XP000901396,

## Description

### TECHNICAL FIELD

The present invention relates to an compact electric hand-held sanding machine with an outer housing and a tool shaft.

### PRIOR ART

Electric sanding machines of the same type are previously known from, for example, US patent 0245182. Here, the intention has been to make a relatively compact and low sanding machine by using a brushless motor and making the proportion between the motor diameter and the motor height great. The drawback of this solution is that the motor diameter unavoidably becomes large and therefore also difficult to be gripped with one hand. Further, since the diameter is large, it becomes disadvantageous to make a hermetic motor with cooling only on the outside. This is very disadvantageous because the air in which the sanding machine is most often used is filled by dust particles that may be both electrically conductive and grinding by nature.

Since electric sanding machines have previously been so large and heavy, it has been necessary to have special sanding machines in, for example, wall grinding. Machines of this type are previously known from, for instance, US patent 5239783 or EP0727281. In these patents, a sanding machine for walls has been made by moving the motor to the far end of the arm and by, for example, using a cable for transmitting power to the grinding head. In this way, balance has been achieved for the machine, but this also makes the machine expensive and difficult to manufacture.

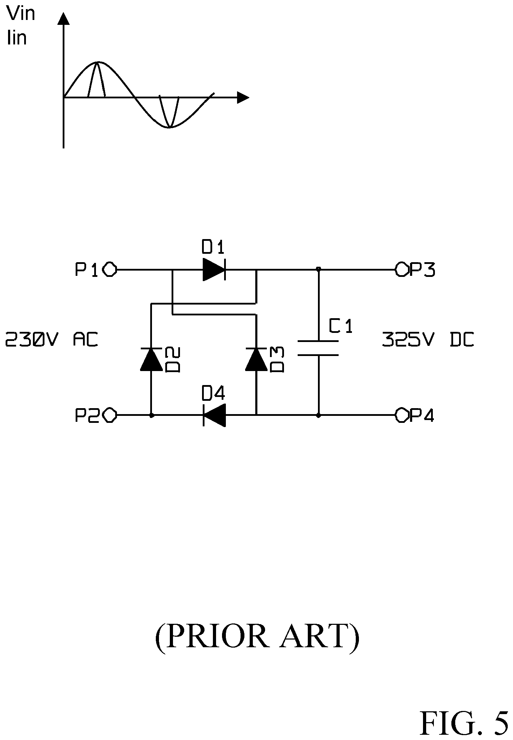

Within the EU and many other markets, there are regulations on how much interference may be generated to the network. Within the EU, standard EN61000-3-2 with amendment A14 is applied. If a switched control unit is made in the simplest way possible by rectifying the mains voltage according to Figure 5 and subsequently having so large a capacitor that the following control can continuously take current until the following pulse comes, very high harmonic components are obtained which interfere with the electric network.

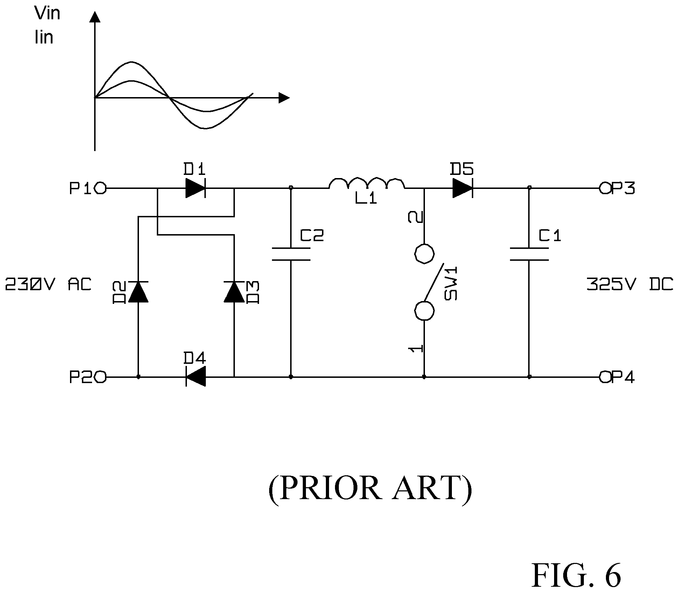

There are two conventional ways of solving this problem: A passive way by filtering the current and voltage with inductances and capacitors, and an active way. The passive way requires space as well as a great volume and weight. The active way functions in such a way that the voltage is first switched with the known "step-up" topology according to Figure 6 in such a way that the relation between the input current and the input voltage corresponds to a resistive load. The output voltage is always higher than the top value of the input voltage. The drawback with the active way is that the current goes through an extra inductance L1 and is, in addition, switched one more time, because the power correction is always followed by a switched control unit.

EP 0 982 845 A discloses a polyphase switched reluctance drive supplied from a passive power factor correction circuit.

The publication by Kit Sum K: "Improved Valley-Fill Passive Power Factor Correction Current Shaper Approaches IEC Specification Limits", Manuscript Swissball Exercises, vo. 24, no. 2, page 42, 44, 47-51 discloses a simulation and analysis of a valley-fill current shaper.

US 2005/0245183 A1 discloses a hand held orbital sander that has a housing having an electronically commutated motor disposed therein and an orbit mechanism disposed beneath the housing.

JP2006-223014 discloses a motor drive device including a rectification circuit with the aim to achieve size and cost reduction at sufficient efficiency.

### BRIEF DESCRIPTION OF THE INVENTION

An object of the present invention is to alleviate above-mentioned disadvantages. The object of the invention is achieved by the subject-matter of claim 1. Advantageous embodiments are disclosed by the dependent claims.

The sanding machine according to an example has an electric drive motor that is brushless and without a shaft of its own, mounted in such a way that the rotor is fastened to the tool shaft and the stator is positioned in the outer housing. A sanding machine constructed in this way has a compact structure allowing the sanding machine to be gripped ergonomically with one hand. The compact structure enables a manner of use and a device in the form of an arm that can be fastened to the sanding machine for a comfortable two-hand grip and an extended range of operation for the machine. At the same time, an exemplary structure may enable a hermetic structure in which the cooling air passes only on the outside of the stator and which is thus very insensitive to impurities in the cooling air. Since the sanding machine also has a low profile, the control of the grinding properties of the machine is good.

The motor type used in the invention is what is called BLDC (Brushless Direct Current) motor. Due to the strong magnetic field of the new NdFeB magnets, the motor has high power per volume and high efficiency. Thanks to these features, it has been possible to make the motor sufficiently small to enable this invention. An advantageous solution is to use a slotless version of the BLDC motor. The slotless motor has smaller iron losses and a more advantageous price because the iron core of lamination stacks has a simpler form, and the winding is simpler to carry out.

The tool shaft may have a eccentrically positioned tool holder and the rotor of the drive motor without own shaft is fastened to the tool shaft, and stator is positioned in the outer housing. The tool shaft is arranged to extend within the rotor of the drive motor and therefore replaces it's own shaft.

The prior art tools have a tool shaft that is without eccentricity and balance weights. The eccentricity is made with an external part that is fastened to the motor shaft. The reason for making the eccentricity with an external part is that then the rotor can be fastened to the shaft in conventional way and the bearings can be assembled from both ends. This solution makes the sander much less compact.

The cooling air may be generated by a blower that is mounted on the tool shaft and can advantageously be integrated in the same vertical direction as the balance weights of the tool shaft. The same cooling air that cools the motor first cools the control unit.

Since, thanks to the present invention, the sanding machine is much lighter and more compact than known electric sanding machines, special sanding machines intended for wall grinding have become completely unnecessary. Previously, it has been necessary to make the grinding head lighter by moving the motor to the other end of the arm but with the consequence that transmission with a cable or shafts is needed. The present sanding machine can be fastened to the end of an arm in such a way that it is freely mobile in one or more flexible directions. Since the sanding machine is so light, it is still as easy to handle as special wall sanding machines having complicated and expensive transmission. If dust extraction is needed, it is advantageous to lead the extraction to a hollow arm.

Control of the motor is carried out electronically to be able to vary the speed of rotation. The control unit is made in such a way that the speed of rotation is kept on a given level irrespective of the load of the machine. The control unit is positioned in connection with the sanding machine. A preferable solution is to use sensorless control, i.e. control without a sensing device to determine the position of the rotor in the electronic commutation. The sensorless control usually utilizes the voltage generated in the phase that is not conducting to determine the position of the rotor.

The position of the rotor in the electric commutation can also be determined on the basis of the currents generated in the different phases or the relation between current and voltage in the phases.

When the control is sensorless, the motor is more compact because the sensors, most often Hall sensors, make the motor considerably longer.

According to the new solution for a switched control unit, the motor is dimensioned in such a way that the nominal voltage of the motor is lower than the top value of the rectified mains voltage. When current is consumed during that part of the cycle when the voltage is higher than the nominal voltage of the motor and no current is consumed when the voltage is lower than the nominal voltage of the motor, different degrees of power correction are obtained, depending on how much lower the nominal voltage is. If the time during which the current corresponds to an optimal load in relation to the whole cycle is sufficiently long, the harmonic components generated back to the electric network will be within the allowed values. When mains voltage of 230 V is rectified, a top value of 325 V is obtained. If the nominal voltage of the motor is, for example, 200 V, there is a current flow approximately 60 % of the time. The current is generated in such a way that no current flows when the rectified mains voltage is equal to the nominal voltage, and it increases linearly in such a way that the current is 10 A when the voltage is 325 V. This gives an effective power of approximately 1,100 W. The third harmonic current component is thus 2.4 A, which is within the allowed limit for a portable hand tool. The other harmonic components also have allowed values. Since the windings of the motor form a coil with self-inductance L1, the switched control unit can also be preferably made without external inductances.

### BRIEF DESCRIPTION OF THE FIGURES

The invention is described in more detail in the following with reference to the attached drawings, in which
Figure 1 shows a top view of the sanding machine;
Figure 2 shows a side view of the sanding machine;
Figure 3 shows a cross-section along line A-A;
Figure 4 shows a cross-section along line B-B;
Figure 5 shows an electricity drawing of prior art control;
Figure 6 shows prior art power correction;
Figure 7 shows a first embodiment of new motor control; and
Figure 8 shows a second embodiment of the motor control.

### PREFERRED EMBODIMENTS

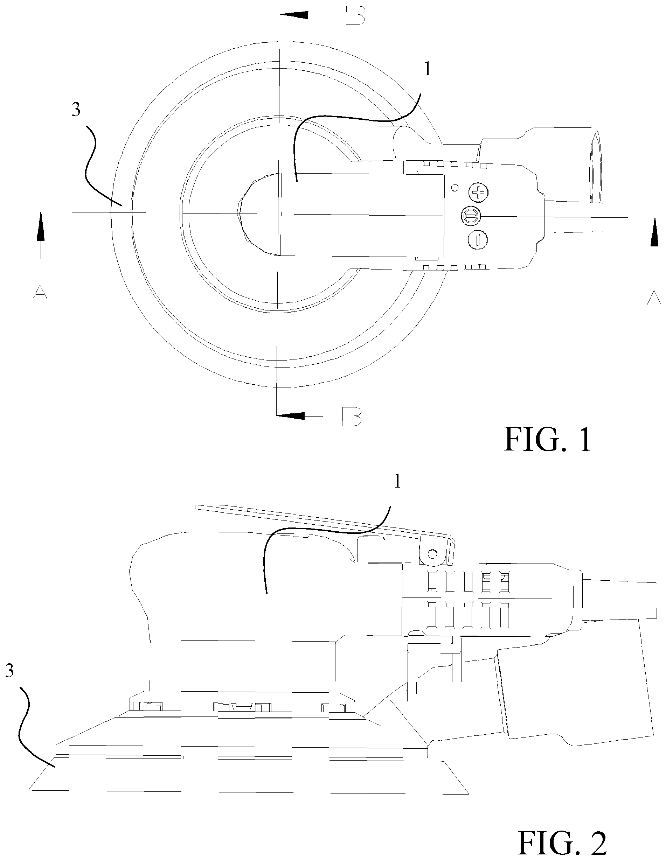

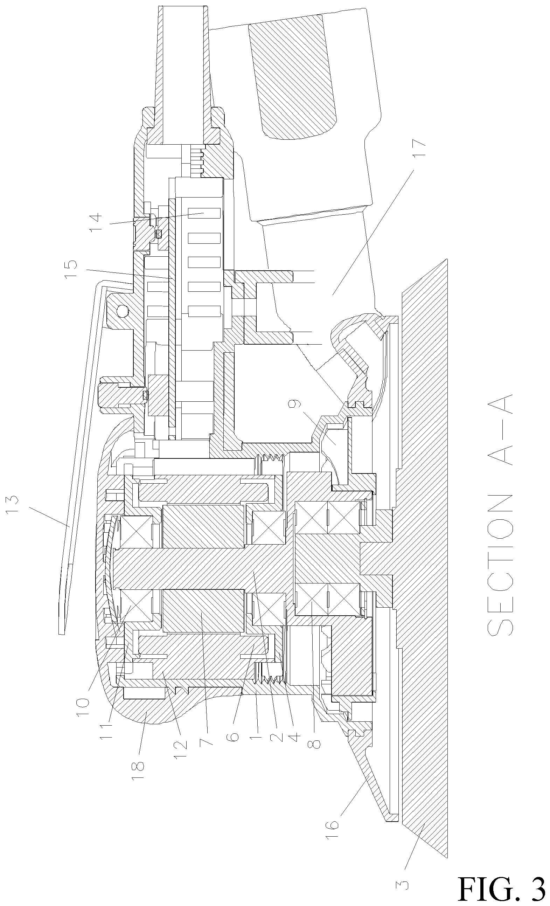

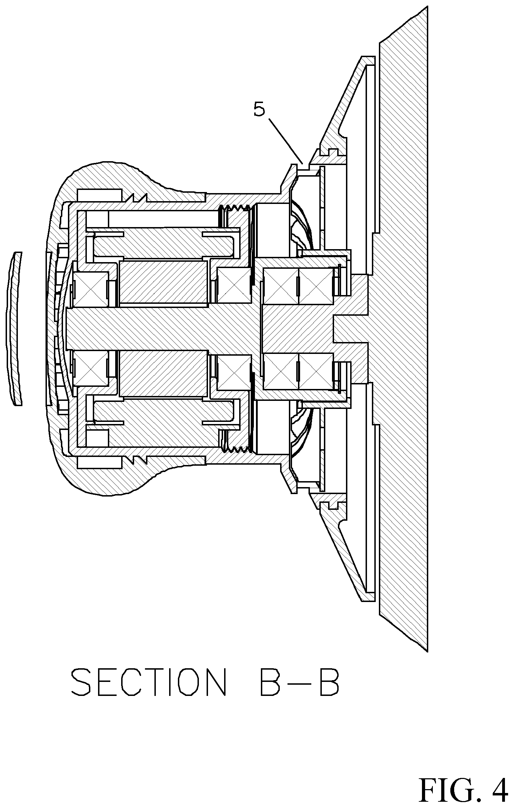

The sanding machine shown in Figures 1 to 4 is formed of a housing 1 enclosing all parts of the motor. The motor is formed of a stator 6, including a casing with cooling fins 12 and a rotor 7. These parts are integrated with the parts keeping a tool shaft 2, a bearing housing at both ends 4, 11 and a bearing 10 in place, in such a way that the rotor 7 is fastened to the tool shaft 2. The casing and cooling fins of the stator 6 are shaped in such a way that an air slot is generated which is limited by the casing, the housing of the sanding machine and the cooling fins. The grinding disc 3 is fastened freely rotationally to the tool shaft 2 via an eccentric bearing 8. The blower 9, which is fastened to the tool shaft 2 preferably at the same height as the balance weights, sucks in air through the hole 14. The air cools the control unit 15 and then the motor via the cooling fins 12. The air is blown out through the hole 5. The shroud 16 collects the grinding dust that is sucked out through the grinding disc 3 and further out through the extraction pipe 17. The switch 13 is in connection with the control unit and attends to the switching on and switching off ergonomically. A soft part 18 around the casing makes the machine grip-friendly. In another embodiment, the disc is not freely rotating, but the disc is rotating with or without eccentric movement through a connection to the tool shaft 2.

The rotor is prevented to rotate in respect to the shaft with a woodruff key where the corresponding slot is shown in the rotor in picture 4. The rotor can also be prevented to rotate with other kind of keys or with splines.

The balance weights that are integrated in the tool shaft are so large that the bearing 10 (lower part) has to be mounted before the rotor is fastened to the tool shaft.

To enhance the compactness the bearings 10 and the bearing housings 4, 11 are partly or fully inside the stator 6 or the windings.

In another embodiment, the dust extraction also attends to the cooling of the motor in such a way that part of the air is sucked via the motor and the cooling fins, and in this way the motor cools off without a separate blower.

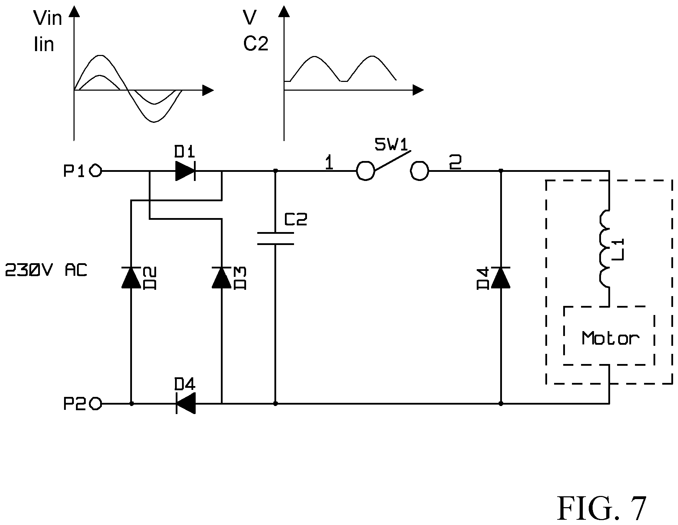

Functioning of the power correction of the control unit in a first embodiment is described in Figure 7. The mains voltage is rectified and the following capacitor C2 is so small that the voltage follows the rectified voltage. The motor is dimensioned in such a way that the nominal voltage of the motor is so much lower than the top value of the rectified mains voltage in relation to the required power that power correction is obtained when current is consumed during that part of the cycle when the voltage is higher than the nominal voltage of the motor and no current is consumed when the voltage is lower than the nominal voltage of the motor. The control unit utilizes the well-known "step-down" topology in such a way that the relation between current and voltage is optimized so that smallest harmonic components possible are generated, and thus also the best possible power correction is achieved in that part of the cycle in which the voltage is higher than the nominal voltage of the motor. If the voltage is lower than the nominal voltage, no power is taken to the motor. If the time when the current corresponds to the optimal load in relation to the whole cycle is sufficiently long in relation to the required power, the harmonic components generated back to the electric network will be within allowed values. If the self-inductance L1 of the motor is sufficiently great, the control unit can preferably be made without external inductances. The motor in Figure 7 has been simplified in such a way that only one switch SW1 is shown. In practice, electronically commutated 3-phase control is directly carried out for the motor.

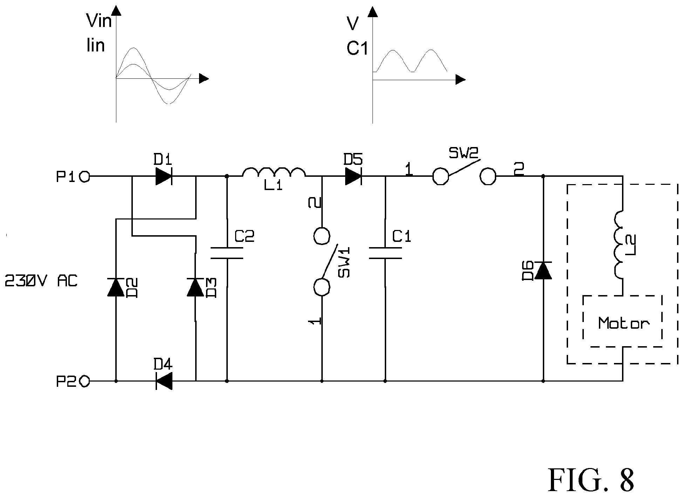

If the power correction obtained is not sufficient, the function can be further improved according to the embodiment in Figure 8. Here, an external inductance L1 and an extra switch according to "step-up" topology have been incorporated to carry out power correction also during the time when the voltage is lower than the nominal voltage of the motor. The connection is still preferable because the current and the voltage are lower than in a case where the power correction should be carried out during the whole cycle. Above all, the value at the external inductance L1 may be lower because the voltage is lower when the switching is carried out.

The above description and the related figures are only intended to illustrate a present solution for the structure of a sanding machine. Thus, the solution is not confined merely to the above or the embodiment described in the attached claims, but a plurality of variations or alternative embodiments are feasible within the scope of the attached claims.

## Claims

1. An electric sanding machine comprising a brushless Direct Current motor and a control unit configured for rectification of a mains voltage and switched motor control,
the control unit comprising a rectification circuit (D1, D2, D3, D4) and a following capacitor (C2) having a capacity that is so small that a voltage applied to the motor follows the rectified mains voltage,
the motor being dimensioned in such a way that the nominal voltage of the motor is lower than the top value of the rectified mains voltage,
so that depending on how much lower the nominal voltage is, different degrees of power correction are obtained, when current is consumed during that part of the cycle when the voltage is higher than the nominal voltage of the motor and no current is consumed when the voltage is lower than the nominal voltage of the motor,
the control unit utilizing a "step-down" topology in such a way that the relation between current and voltage is optimized so that smallest harmonic components possible are generated, and thus also the best possible power correction is achieved in that part of the cycle in which the voltage is higher than the nominal voltage of the motor.

2. The electric sanding machine according to claim 1, whereby the control unit is a switched control unit and does not comprise an external inductance.

3. The electric sanding machine according to claim 1, whereby the control unit further comprises an external inductance (L1) and a switch according to a "step-up" topology to carry out power correction also during the time when the voltage is lower than the nominal voltage of the motor.

4. The electric sanding machine according to any one of the preceding claims, whereby electronically commutated 3-phase control is carried out for the motor.

5. The electric sanding machine according to claim 4, whereby the control unit is configured to keep the speed of rotation on a given level irrespective of the load of the machine.

6. The electric sanding machine according to claim 4, whereby the control unit does not comprise a sensing device to determine the position of the rotor of the motor in electronic commutation.

7. The electric sanding machine according to claim 4, whereby the control unit is configured to determine the position of the rotor of the motor by using the voltage generated in the phase that is not conducting.

8. The electric sanding machine according to claim 4, whereby the control unit is configured to determine the position of the rotor of the motor in the electric commutation based on currents generated in different phases.

9. The electric sanding machine according to claim 4, whereby the control unit is configured to determine the position of the rotor of the motor in the electric commutation based on a relation between current and voltage in the phases.

10. The electric sanding machine according to any one of the preceding claims, whereby if the mains voltage is 230 V, the top value of the rectified mains voltage is 325 V and the nominal voltage of the motor is 200 V, the current flows approximately 60% of the time, whereby the current is generated in such a way that no current flows when the rectified mains voltage is equal to the nominal voltage, and it increases linearly in such a way that the current is 10 A when the voltage is 325 V.

11. The electric sanding machine according to claim 10, whereby the third harmonic current component is 2.4 A, which is within the allowed limit for a portable hand tool.

## Patentansprüche

1. Elektrische Schleifmaschine, umfassend einen bürstenlosen Gleichstrommotor und eine Steuereinheit, die zur Gleichrichtung einer Netzspannung und zur geschalteten Motorsteuerung konfiguriert ist,
wobei die Steuereinheit eine Gleichrichtungsschaltung (D1, D2, D3, D4) und einen folgenden Kondensator (C2) mit einer Kapazität umfasst, die so gering ist, dass eine an den Motor angelegte Spannung der gleichgerichteten Netzspannung folgt,
wobei der Motor so bemessen ist, dass die Nominalspannung des Motors niedriger ist als der Höchstwert der gleichgerichteten Netzspannung,
so dass je nachdem, wie viel niedriger die Nominalspannung ist, unterschiedliche Grade an Leistungskorrektur erhalten werden, wenn Strom während desjenigen Teils des Zyklus verbraucht wird, in dem die Spannung höher ist als die Nominalspannung des Motors, und kein Strom verbraucht wird, wenn die Spannung niedriger ist als die Nominalspannung des Motors,
wobei die Steuereinheit eine "Abwärts"-Topologie so nutzt, dass das Verhältnis zwischen Strom und Spannung optimiert wird, so dass die kleinstmöglichen Oberschwingungskomponenten generiert werden und so auch die bestmögliche Leistungskorrektur in demjenigen Teil des Zyklus erreicht wird, in dem die Spannung höher ist als die Nominalspannung des Motors.

2. Elektrische Schleifmaschine nach Anspruch 1, wobei die Steuereinheit eine geschaltete Steuereinheit ist und keine externe Induktanz umfasst.

3. Elektrische Schleifmaschine nach Anspruch 1, wobei die Steuereinheit weiter eine externe Induktanz (L1) und einen Schalter gemäß einer "Aufwärts"-Topologie umfasst, um Leistungskorrektur auch während der Zeit durchzuführen, in der die Spannung niedriger ist als die Nominalspannung des Motors.

4. Elektrische Schleifmaschine nach einem der vorstehenden Ansprüche, wobei elektronisch kommutierte dreiphasige Steuerung für den Motor ausgeführt wird.

5. Elektrische Schleifmaschine nach Anspruch 4, wobei die Steuereinheit konfiguriert ist, die Rotationsgeschwindigkeit unabhängig von der Belastung der Maschine auf einem gegebenen Niveau zu halten.

6. Elektrische Schleifmaschine nach Anspruch 4, wobei die Steuereinheit keine Sensorvorrichtung umfasst, um die Position des Rotors des Motors in der elektronischen Kommutation zu bestimmen.

7. Elektrische Schleifmaschine nach Anspruch 4, wobei die Steuereinheit konfiguriert ist, die Position des Rotors des Motors unter Verwendung der in der nichtleitenden Phase generierten Spannung zu bestimmen.

8. Elektrische Schleifmaschine nach Anspruch 4, wobei die Steuereinheit konfiguriert ist, die Position des Rotors des Motors in der elektrischen Kommutation aufgrund von in unterschiedlichen Phasen generierten Strömen zu bestimmen.

9. Elektrische Schleifmaschine nach Anspruch 4, wobei die Steuereinheit konfiguriert ist, die Position des Rotors des Motors in der elektrischen Kommutation aufgrund eines Verhältnisses zwischen Strom und Spannung in den Phasen zu bestimmen.

10. Elektrische Schleifmaschine nach einem der vorstehenden Ansprüche, wobei, wenn die Netzspannung 230 V, der Höchstwert der gerichteten Netzspannung 325 V und die Nominalspannung des Motors 200 V beträgt, der Strom zu annähernd 60 % der Zeit fließt, wobei der Strom so generiert wird, dass kein Strom fließt, wenn die gerichtete Netzspannung gleich der Nominalspannung ist und linear so ansteigt, dass der Strom 10 A beträgt, wenn die Spannung bei 325 V liegt.

11. Elektrische Schleifmaschine nach Anspruch 10, wobei die dritte Oberschwingungsstromkomponente 2,4 A beträgt, was innerhalb der zugelassenen Grenze für ein tragbares Handwerkzeug liegt.

## Revendications

1. Machine à poncer électrique comprenant un moteur à CC sans balai et une unité de commande configurée pour le redressement d'une tension de secteur et une commande de moteur commutée,
l'unité de commande comprenant un circuit de redressement (D1, D2, D3, D4) et un condensateur suivant (C2) ayant une capacité si petite qu'une tension appliquée au moteur suit la tension de secteur redressée,
le moteur étant dimensionné de telle façon que la tension nominale du moteur est plus faible que la valeur de crête de la tension de secteur redressée,
de sorte qu'en fonction de la mesure dans laquelle la tension nominale est plus faible, divers degrés de correction de puissance sont obtenus, lorsque le courant est consommé pendant cette partie du cycle où la tension est plus élevée que la tension nominale du moteur, et aucun courant n'est consommé lorsque la tension est plus faible que la tension nominale du moteur,
l'unité de commande utilisant une topologie « d'abaissement » de sorte que la relation entre courant et tension est optimisée de manière à ce que les composantes harmoniques les plus petites possible soient générées, et ainsi également la meilleure correction de puissance possible est obtenue dans cette partie du cycle dans laquelle la tension est plus élevée que la tension nominale du moteur.

2. Machine à poncer électrique selon la revendication 1, dans laquelle l'unité de commande est une unité de commande commutée et ne comprend pas une inductance externe.

3. Machine à poncer électrique selon la revendication 1, dans laquelle l'unité de commande comprend en outre une inductance externe (L1) et un commutateur selon une topologie d'« élévation » pour effectuer une correction de puissance également pendant le temps où la tension est plus faible que la tension nominale du moteur.

4. Machine à poncer électrique selon l'une quelconque des revendications précédentes, dans laquelle une commande en triphasé commutée électroniquement est effectuée pour le moteur.

5. Machine à poncer électrique selon la revendication 4, dans laquelle l'unité de commande est configurée pour maintenir la vitesse de rotation à un niveau donné indépendamment de la charge de la machine.

6. Machine à poncer électrique selon la revendication 4, dans laquelle l'unité de commande ne comprend pas de dispositif de détection pour déterminer la position du rotor du moteur en commutation électronique.

7. Machine à poncer électrique selon la revendication 4, dans laquelle l'unité de commande est configurée pour déterminer la position du rotor du moteur en utilisant la tension générée dans la phase qui ne conduit pas.

8. Machine à poncer électrique selon la revendication 4, dans laquelle l'unité de commande est configurée pour déterminer la position du rotor du moteur dans la commutation électrique sur la base de courants générés dans différentes phases.

9. Machine à poncer électrique selon la revendication 4, dans laquelle l'unité de commande est configurée pour déterminer la position du rotor du moteur dans la commutation électrique sur la base d'une relation entre courant et tension dans les phases.

10. Machine à poncer électrique selon l'une quelconque des revendications précédentes, dans laquelle si la tension de secteur est de 230 V, la valeur de crête de la tension de secteur redressée est de 325 V et la tension nominale du moteur est de 200 V, le courant circule approximativement 60 % du temps, de sorte que le courant est généré de telle manière qu'aucun courant ne circule lorsque la tension de secteur redressée est égale à la tension nominale, et qu'il augmente linéairement de telle façon que le courant soit de 10 A lorsque la tension est de 325 V.

11. Machine à poncer électrique selon la revendication 10, dans laquelle la troisième composante de courant harmonique est de 2,4 A, ce qui est dans la limite admise pour un outil à main portatif.
